Europäisches Patentamt

European Patent Office

Office européen des brevets

(19)

(11) Veröffentlichungsnummer: **0 059 934**
**A1**

(12) **EUROPÄISCHE PATENTANMELDUNG**

(21) Anmeldenummer: **82101646.6**

(22) Anmeldetag: **03.03.82**

(51) Int. Cl.³: **B 23 Q 17/16**

(30) Priorität: **05.03.81 DE 3108251**

(43) Veröffentlichungstag der Anmeldung:
**15.09.82 Patentblatt 82/37**

(84) Benannte Vertragsstaaten:
**AT BE CH FR GB IT LI LU NL SE**

(71) Anmelder: **Sillner, Georg**
**Buchenstrasse 23**
**D-8411 Zeitlarn(DE)**

(72) Erfinder: **Sillner, Georg**
**Buchenstrasse 23**
**D-8411 Zeitlarn(DE)**

(74) Vertreter: **Graf, Helmut et al,**
**Greflinger Strasse 7 Postfach 382**
**D-8400 Regensburg(DE)**

(54) Vorrichtung zum lagegenauen Ausrichten eines Werkstücks in zwei, vorzugsweise senkrecht zueinander verlaufenden Koordinatenachsen bezüglich eines Werkzeugs oder einer Werkzeughalterung einer Werkzeugmaschine.

㊀ Die Erfindung betrifft eine Vorrichtung zum lagegenauen Ausrichten eines Werkstückes in zwei, vorzugsweise senkrecht zueinander verlaufenden Koordinatenachsen bezüglich wenigstens eines Werkzeugs oder einer Werkzeughalterung einer Werkzeugmaschine, mit einer eine Werkstückauflagefläche bildenden Basisplatte (7), mit wenigstens zwei verschiebbaren Elementen (10, 18) auf der Werkstückauflagefläche (7) zur Bildung von wenigstens zwei einstellbaren Werkstückanlageflächen (31, 32), von denen das erste Element (10) in der ersten Koordinatenachse und das zweite Element (18) in der zweiten Koordinatenachse verschiebbar ist, sowie mit den verschiebbaren Elementen (10, 18) zugeordneten Meßeinrichtungen zur Anzeige der jeweiligen Lage der Werkstückanlageflächen (31, 32) bezogen auf eine Ausgangstellung dieser Anlageflächen, wobei zur Justierung der Vorrichtung bezüglich des Werkzeugs bzw. der Werkzeughalterung im Bereich der Werkstückauflagefläche (7) eine Markierung vorgesehen ist. Das Neue der Erfindung liegt darin, daß das erste Element (10) mit Führungsstücken (14, 17) beidendig an zwei sich in Richtung der ersten Koordinatenachse erstreckenden und parallel zueinander verlaufenden Seitenflächen (7') der Basisplatte (7) geführt ist, daß das zweite Element (18) an dem ersten Element (10) verschiebbar gehaltert ist und sich mit einer in Richtung der zweiten Koordinatenachse sowie quer bzw. senkrecht zur Werkstückauflagefläche (7) erstreckenden und eine Führungsfläche bildenden seitlichen Begrenzungsfläche gegen eine seitliche Bergrenzungsfläche (10) des ersten Elementes abstützt, und daß die dem zweiten Element (18) zugeordnete Meßeinrichtung die Verschiebung dieses zweiten Elementes (18) relativ zum ersten Element (10) anzeigt.

./...

Fig.1

"Vorrichtung zum lagegenauen Ausrichten eines Werkstücks in zwei, vorzugsweise senkrecht zueinander verlaufenden Koordinatenachsen bezüglich eines Werkzeugs oder einer Werkzeughalterung einer Werkzeugmaschine".

Die Erfindung bezieht sich auf eine Vorrichtung zum lagegenauen Ausrichten eines Werkstücks in zwei, vorzugsweise senkrecht zueinander verlaufenden Koordinatenachsen (X-Achse und Y-Achse) bezüglich wenigstens eines Werkzeuges oder einer Werkzeughalterung einer Werkzeugmaschine, mit einer eine Werkstückauflagefläche bildenden Basisplatte, mit wenigstens zwei verschiebbaren Elementen auf der Werkstückauflagefläche zur Bildung von wenigstens zwei einstellbaren Werkstückanlageflächen, von denen das erste Element in der ersten Koordinatenachse und das zweite Element in der zweiten Koordinatenachse verschiebbar ist, sowie mit den verschiebbaren Elementen zugeordneten Meßeinrichtungen zur Anzeige der jeweiligen Lage der Werkstückanlageflächen bezogen auf eine Ausgangsstellung dieser Anlageflächen, wobei zur Justierung der Vorrichtung bezüglich des Werkzeugs bzw. der Werkzeughalterung im Bereich der Werkstückauflagefläche eine Markierung vorgesehen ist.

Im Maschinenbau ist es oftmals erforderlich, beispielsweise Bohrungen in ein Werkstück einzubringen, wobei die Bohrungen von zwei senkrecht zueinander verlaufenden Bezugsflächen dieses Werkstückes einen vorgegebenen Abstand aufweisen sollen.

Normalerweise wird hierbei, insbes. bei Einzelfertigung so vorgegangen, daß mit Hilfe eines Höhenreißers die Achsen bzw. Mittelpunkte der vorzusehenden Bohrungen angezeichnet und dann durch Ankörnen festgelegt werden. Werden Hohlgenauigkeiten gefordert, so ist es weiterhin notwendig, vor dem eigentlichen Bohrvorgang an den angezeigten Stellen mit Hilfe eines speziellen Zentrierbohrers Zentrierbohrungen in das Werkstück einzubringen. Dieses heute noch sehr häufig praktizierte Verfahren ist äußerst umständlich und zeitraubend und daher sehr kostenintensiv, zumal gerade Bohrarbeiten insbesondere im Feinmaschinenbau einen ganz erheblichen
Teil der insgesamt notwendigen Arbeitszeit in Anspruch nehmen.

Bekannt sind weiterhin Bohrmaschinen (Ständerbohrmaschinen),
bei denen an der Arbeitsfläche zwei Anlageflächen für Werkstücke
bildende linealartige Elemente in zwei senkrecht zueinander verlaufenden Koordinatenachse verschiebbar geführt sind, wobei jedem
verschiebbarem Element eine Meßeinrichtung zugeordnet ist, wobei
diese Meßeinrichtungen die jeweilige Lage der Werkstückanlageflächen bezogen auf ihre Ausgangsstellung (z.B. Nullstellung)
anzeigen. Die Anzeige erfolgt dabei entweder elektrisch oder
aber durch eine an der Arbeitsfläche (Werkstückauflagefläche) der
Bohrmaschine vorgesehene Skala. Diese bekannten Bohrmaschinen gestatten zwar ein Einbringen von Bohrungen oder Zentrierbohrungen
in Werkstücke mit hoher Genauigkeit, die bekannten Bohrmaschinen
sind jedoch in der Anschaffung sehr teuer, so daß ihre Verwendung
in den meisten Fällen wirtschaftlich nicht vertretbar ist. Nachteilig ist bei diesen bekannten Bohrmaschinen grundsätzlich auch,
daß die Arbeitsfläche und die an dieser Arbeitsfläche verschiebbar geführten linealartigen Elemente sowohl in konstruktiver Hinsicht als auch hinsichtlich ihrer Zentrierung bzw. Justierung bezogen auf die Werkzeughalterung fester Bestandteil der Bohrmaschine sind, d.h. es ist grundsätzlich nicht möglich, die Arbeitsfläche mit den verschiebbaren Elementen im Bedarfsfalle von einer
Bohrmaschine abzunehmen und bei einer anderen Bohrmaschine zu verwenden, da in diesem Fall eine umständliche Neujustierung in beiden Koordinatenachsen notwendig würde, um sicherzustellen, daß die
von den Meßeinrichtungen angezeigten Werte auch der jeweiligen
tatsächlichen Lage der Anlageflächen in den Koordinatenachsen entsprechen.

Vorgeschlagen wurden weiterhin Hilfsvorrichtungen zum Ausrichten
eines Werkstückes in zwei senkrecht zueinander verlaufenden Koordinatenachsen, wobei diese Hilfsvorrichtungen nicht fester Bestandteil einer Bohrmaschine sind, sondern im Bedarfsfall an der Arbeitsfläche (Tisch) einer Bohrmaschine befestigt werden können. Nachteilig ist bei diesen bekannten Hilfsvorrichtungen vor allem, daß sie in konstruktiver Hinsicht sehr aufwendig sind und/oder bei ihnen nur eine ungenaue Führung der die Werkstückanlageflächen bildenden verschiebbaren Elemente gegeben ist. Teilweise sind die bekannten Hilfsvorrichtungen auch in ihrer Handhabung sehr umständlich.

Der Erfindung liegt die Aufgabe zugrunde, eine Vorrichtung zum lagegenauen Ausrichten von Werkstücken in zwei Koordinatenachsen aufzuzeigen, die (Vorrichtung) bei Werkzeugmaschinen, z.B. Bohrmaschinen, verschiedenster Art verwendbar ist, ohne daß zuvor jeweils eine zeitraubende und umständliche Justierung erforderlich ist, und die vor allem eine einfache und preiswerte Konstruktion besitzt, gleichzeitig jedoch eine hohe Genauigkeit beim Ausrichten eines Werkstückes gewährleistet.

Zur Lösung dieser Aufgabe ist eine Vorrichtung der eingangs geschilderten Art erfindungsgemäß so ausgebildet, daß das erste Element mit Führungsstücken beidendig an zwei sich in Richtung der ersten Koordinatenachse erstreckenden und parallel zueinander verlaufenden Seitenflächen der Basisplatte geführt ist, daß das zweite Element an dem ersten Element verschiebbar geführt ist und sich mit einer in Richtung der zweiten Koordinatenachse sowie quer mbzw. senkrecht zur Werkstückauflagefläche erstreckenden und eine Führungsfläche bildenden seitlichen Begrenzungsfläche gegen eine seitliche Begrenzungsfläche des ersten Elementes abstützt, und daß die dem zweiten Element zugeordnete Meßeinrichtung die Verschiebung dieses zweiten Elementes relativ zum ersten Element anzeigt.

Die erfindungsgemäße Vorrichtung läßt sich trotz einer hohen Genauigkeit für das Ausrichten der Werkstücke aus wenigen Einzelteilen einfacher Formgebung billig herstellen, wobei insbes. die Basisplatte eine einfache Platte mit zwei parallel zueinander verlaufenden Oberflächenseiten sowie mit zwei parallel zueinander verlaufenden Seitenflächen ist, welch letztere zur Führung des ersten verschiebbaren Elementes in Richtung der ersten Koordinatenachse dienen. Besondere Führungsschienen und/oder -nuten an der Basisplatte sind bei der erfindungsgemäßen Vorrichtung nicht erforderlich. Weiterhin läßt sich bei der erfindungsgemäßen Vorrichtung auch das erste, verschiebbare Element als einfaches plattenförmiges Teil herstellen, wobei dann eine quer bzw. senkrecht zur ersten Koordinatenachse verlaufende seitliche Begrenzungsfläche bzw. Seitenfläche dieses plattenförmigen Teils eine Anlage- bzw. Führungsfläche bildet, gegen die sich das zweite verschiebbare Element abstützt. Hierdurch wird nicht nur eine exakte Führung des zweiten Elementes in der zweiten Koordinatenachse erreicht, sondern gleichzeitig auch sichergestellt, daß beim Bearbeiten des Werkstückes auftretende Kräfte vom zweiten Element auf das erste Element übertragen werden, und zwar außerhalb der eigentlichen Führung, mit der das zweite Element am ersten Element verschiebbar gehaltert ist. Diese Führung kann daher sehr einfach z.B. in Form einer Nut-Feder-Führung ausgebildet sein. Besonders vorteilhafte Verhältnisse ergeben sich dann, wenn die beiden Werkstückanlageflächen am zweiten Element vorgesehen sind und einen Winkel, d.h. vorzugsweise einen Winkel von 90$^o$ miteinander einschließen, der sich zu der der Führungsfläche am ersten Element abgewandten Seite des zweiten Elementes hin öffnet. In diesem Fall ist stets sichergestellt, daß die eigentliche Führung des zweiten Elementes von allen, beim Bearbeiten eines Werkstückes auftretenden Kräften entlastet ist, d.h. derartige Kräfte ausschließlich über die gegen die Führungsfläche des ersten Elementes anliegende Begrenzungsfläche des zweiten Elementes übertragen werden.

Die erfindungsgemäße Vorrichtung ist einfach in der Handhabung, da zum Ausrichten des Werkstücks in den Koordinatenachsen jedes verschiebbare Element nur in einer Koordinatenachse bewegt werden muß.

Die zur Justierung der Vorrichtung bezüglich des Werkzeugs bzw. der Werkzeughalterung dienende Markierung wird beispielsweise von einer einzigen Zentrierbohrung gebildet. Beim Justieren wird die Vorrichtung so verschoben, daß in diese Zentrierbohrung ein in der Werkzeughalterung eingespannter Zentrierstift paßt.

Die Markierung kann bei der erfindungsgemäßen Vorrichtung grundsätzlich auch ein von den beiden Anlegeflächen gebildetes Eck (Winkel) sein, wobei in diesem Fall für den Justiervorgang ein im Werkzeughalter eingespannter Kantentaster Verwendung findet. Auch andere Arten der Justierung sind dankbar. Unabhängig davon, wie die Justierung der Vorrichtung im einzelnen erfolgt und welche Art der Markierung hierbei verwendet wird, ist es bei der erfindungsgemäßen Vorrichtung grundsätzlich möglich, die Justierung bzw. Ausrichtung bezüglich des Werkzeugs "punktförmig" vorzunehmen, d.h. es ist lediglich notwendig, die Markierung in eine bestimmte Stellung bezogen auf das Werkzeug bzw. auf die Werkzeugeinspann-Vorrichtung zu bringen, was mit einfachen Hilfsmitteln, z.B. mit einem Zentrierdorn oder einem Kantentaster ohne Schwierigkeiten möglich ist.

Diese einfache Justierbarkeit der erfindungsgemäßen Vorrichtung ist darauf zurückzuführen, daß eines der beiden verschiebbaren Elemente nicht am Basiskörper verschiebbar geführt ist, sondern am anderen verschiebbaren Element.

Die beiden Anlageflächen werden bei der erfindungsgemäßen Vorrichtung beispielsweise von jeweils einer Fläche der verschiebbaren Elemente gebildet, d.h. von jeweils einer Fläche, die senkrecht zur Bewegungsrichtung des betreffenden verschiebbaren Elementes liegt. Es ist jedoch bei der erfindungsgemäßen Vorrichtung auch möglich, daß beide Anlageflächen an einem verschiebbaren Element vorgesehen sind.

Weiterbildungen der Erfindung sind in den Unteransprüchen beschrieben.

Die Erfindung wird im folgenden im Zusammenhang mit den Figuren an einem Ausführungsbeispiel erläutert. Es zeigen:

Fig. 1 eine Draufsicht auf eine Ausführungsform der erfindungsgemäßen Vorrichtung;

Fig. 2 in Einzeldarstellung sowie im Schnitt eine zur Justierung der Vorrichtung dienende Bohrung in einer die Auflagefläche für ein Werkstück bildenden Führungsplatte, zusammen mit einem beispielsweise in einem Bohrfutter einer Bohrmaschine zu befestigenden Zentrierdorn;

Fig. 3 die Vorrichtung gemäß Fig. 1 in Seitenansicht sowie teilweise im Schnitt von der in der Fig. 1 unteren Seite her gesehen;

Fig. 4 die Vorrichtung gemäß Fig. 1 in Seitenansicht sowie teilweise im Schnitt von der in der Fig. 1 linken Seite her gesehen;

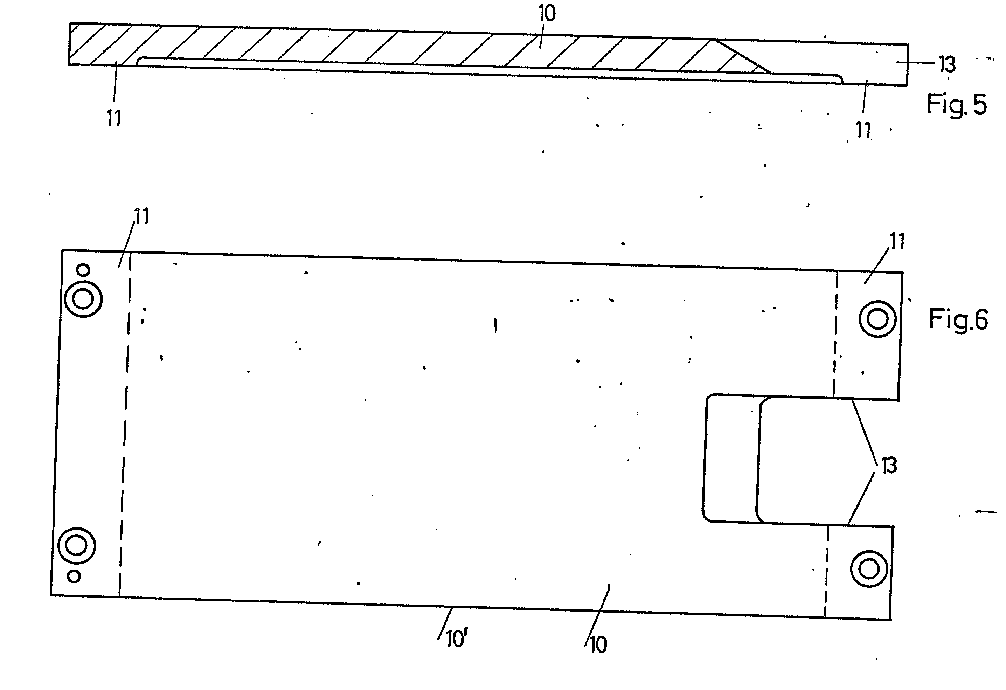

Fig. 5 einen Längsschnitt durch ein, ein verschiebbares Element bildendes Schiebestück der Vorrichtung gemäß Fig. 1;

Fig. 6 eine Draufsicht auf das Schiebestück gemäß Fig. 5;

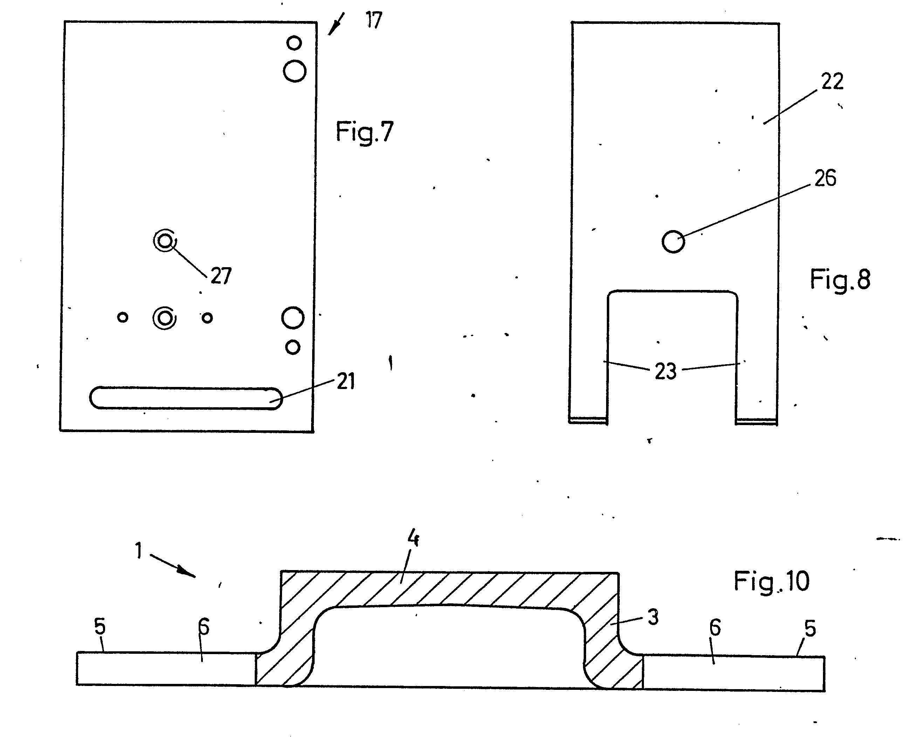

Fig. 7 eine Draufsicht auf eine Aufnahme- bzw. Halteplatte zum Führen und Halten des zweiten verschiebbaren Elementes an dem Schiebestück gemäß den Fig. 5 und 6;

Fig. 8 eine Draufsicht auf ein Klemmstück zum Festklemmen des zweiten verschiebbaren Elementes der Vorrichtung gemäß Fig. 1 am Schiebestück (Fig. 5 und 6) bzw. an der Aufnahmeplatte (Fig. 7);

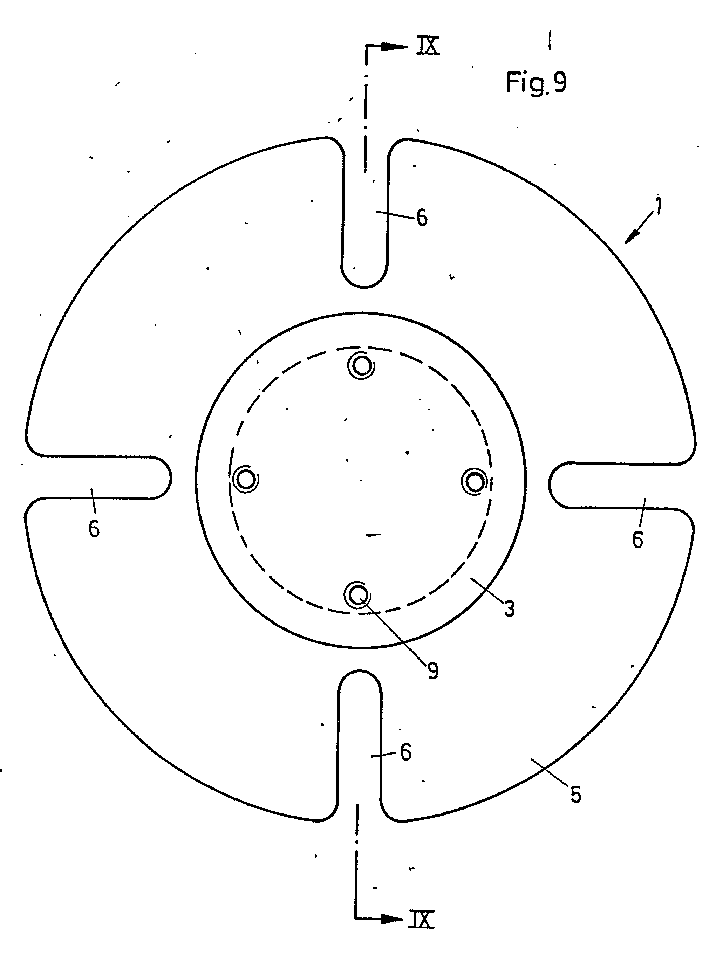

Fig. 9 eine Draufsicht auf eine Grundplatte, die zur Befestigung der Vorrichtung gemäß Fig. 1 beispielsweise an der Arbeitsfläche einer Ständerbohrmaschine dient;

Fig. 10 einen Schnitt entlang der Linie IX-IX der Fig. 9.

Die in den Figuren dargestellte Vorrichtung dient bevorzugt zum lagegenauen Ausrichten eines Werkstücks, beispielsweise eines plattenförmigen Werkstücks bezüglich des Werkzeugs einer Werkzeugmaschine, wobei das Werkzeug bevorzugt ein Zentrierbohrer und die Werkzeugmaschine bevorzugt eine Ständrbohrmaschine sind.

Die Vorrichtung besteht aus einer Grundplatte 1, mit deren Hilfe die Vorrichtung an einer Arbeitsfläche der Werkzeugmaschine, z.B. der Ständerbohrmaschine mit Hilfe von Schrauben 2 und entsprechenden, näher dargestellten Muttern (z.B. Keilmuttern) befestigt werden kann. Bei der dargestellten Ausführungsform ist die Grundplatte 1 tellerartig ausgebildet, d.h. diese Grundplatte besteht aus einem Kreiszylinderstück 3, welches an einem Ende durch eine Wand 4 verschlossen ist und an seinem anderen Ende mit einem über den Umfang des Kreiszylinderstückes 3 vorstehenden ringförmigen Flansch 5 versehen ist, welcher konzentrisch zur Achse des Kreiszylinderstückes 3 liegt. Zur Aufnahme der Schrauben 2 sind im Flansch 5 jeweils um 90° gegeneinander versetzt vier radial nach außen verlaufende und am Rand des Flansches 5 offene Schlitze 6 vorgesehen, mit deren Hilfe eine Justierung bzw. Zentrierung der Grundplatte 1 und damit der gesamten Vorrichtung in zwei Raumachsen an der Arbeitsfläche der Werkzeugmaschine möglich ist.

Die der Wand 4 abgewandte Oberflächenseite des Flansches 5 bildet die Auflagefläche der Vorrichtung auf der Arbeitsfläche der Werkzeugmaschine, während die dem Flansch 5 abgewandte Oberflächenseite der Wand 4 die Auflagefläche für eine Führungsplatte 7 der Vorrichtung bildet. Die dargestellte Grundplatte kann als Drehteil mit hoher Maßgenauigkeit hergestellt werden, was insbesondere auch für die voranstehend genannten Oberflächenseiten des Flansches 5 sowie der Wand 4 gilt.

Die Führungsplatte 7, die mit ihren Oberflächenseiten senkrecht zur Achse des Kreiszylinderstückes 3 liegt, ist an diesem bzw. an dessen Wand 4 mit Hilfe von vier Schrauben 8 befestigt, die jeweils durch Bohrungen in der Führungsplatte 7 hindurch in in der Wand 4 vorgesehene Gewindebohrungen eingreifen.

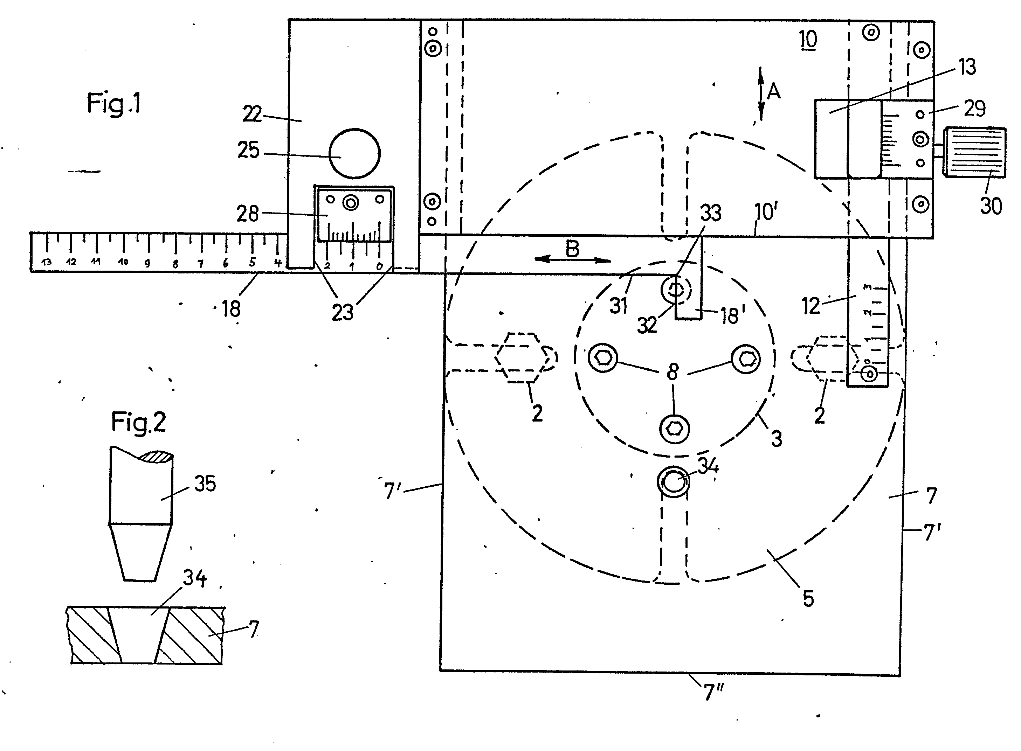

Die Führungsplatte 7 ist bei der dargestellten Ausführungsform rechteckförmig ausgebildet, d.h. sie besitzt zwei parallel zueinander liegende Längsseiten 7' sowie zwei parallel zueinander liegende Querseiten 7", wobei die senkrecht zueinander verlaufenden Längsseiten 7' und Querseiten 7" zwei senkrecht zuei-nander verlaufende Koordinatenachsen festlegen. An der Oberseite, d.h. an der der Grundplatte 1 abgewandten Oberflächenseite der Führungsplatte 7 ist in Richtung der Längsseiten 7', d.h. in Richtung des Doppelpfeiles A ein Schiebestück 10 verschiebbar geführt. Dieses Schiebestück 10 bildet das eine verschiebbare Element der erfindungsgemäßen Vorrichtung. Das Schiebestück 10 ist bei der dargestellten Ausführungsform als langgestrecktes bzw. rechteckförmiges, plattenförmiges Element ausgebildet, und liegt mit seiner Längserstreckung senkrecht zur Verschiebungsrichtung A. Um eine einwandfreie Führung des Schiebestückes 10 an der Oberseite der Führungsplatte 7 zu erreichen, besitzt das Schiebestück an seiner der Oberseite der Führungsplatte 7 zugewandten Unterseite, und zwar im Bereich der sich in Verschiebungsrichtung A erstreckenden Querseiten nach unten vorstehende Ansätze 11, die die Führungsflächen des Schiebestückes 10 an der Oberseite der Führungsplatte 7 bilden. Die Ansätze 11 sind auch erforderlich, um unter dem Schiebestück 10, d.h. im Bewegungsraum dieses Schiebestückes an der Oberseite der Führungsplatte 7 einen eine Meßskala tragenden Streifen 12 befestigen zu können. Dieser Streifen 12, der mit seiner Längserstreckung in Verschiebungsrichtung A liegt, ist der in der Fig. 1 rechten Längsseite 7' benachbart angeordnet. Ebenfalls im Bereich der in der Fig. 1 rechten Längsseite 7' besitzt das Schiebestück 10 eine seitlich offene Ausnehmung 13, durch die die Skala am Streifen 12 sichtbar ist.

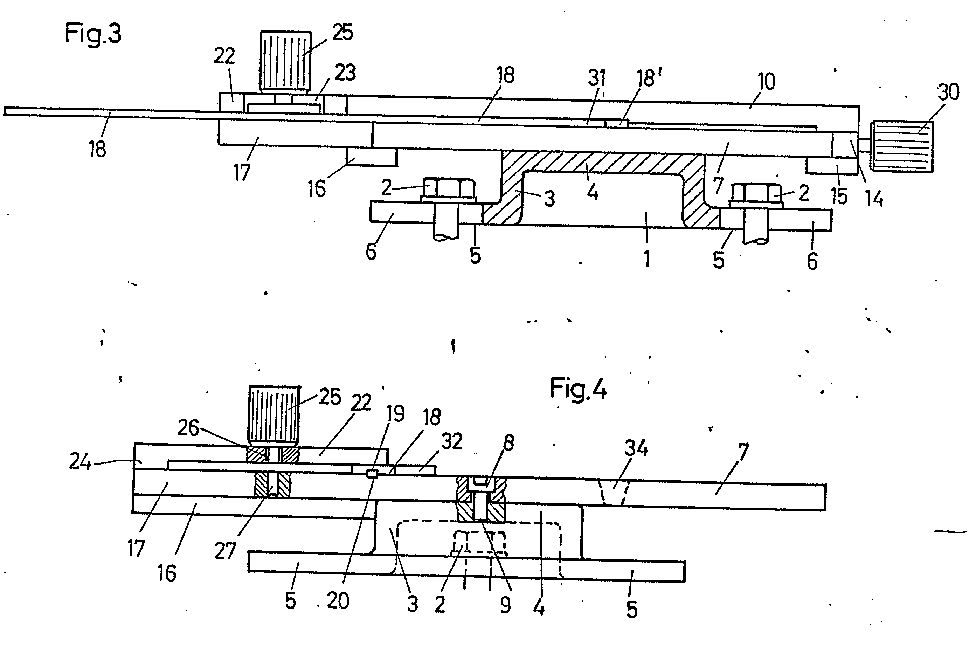

Zur Führung des Schiebestückes 10 an der Führungsplatte 7 ist das Führungsstück so ausgebildet, daß es im Bereich seiner Querseiten jeweils geringfügig über die Längsseiten 7' der Führungsplatte 7 vorsteht, wobei an der in den Fig. 1 und 3 rechten Querseite des Schiebestücks 10 an dessen Unterseite bzw. an dem dort vorgesehenen Ansatz 11 eine Zwischenleiste 14, deren Dicke in etwa gleich der Dicke der Führungsplatte 7 ist, sowie eine Führungsleiste 15 z.B. durch Schrauben befestigt sind, welch letztere die Führungsplatte 7 an ihrer der Grundplatte 1 zugewandten Unterseite hintergreift, so daß das Schiebestück 10 an seiner in den Fig. 1 und 3 rechten Querseite einerseits durch die an der Längsseite 7' anliegende Zwischenleiste und andererseits durch die gegen die Unterseite der Führungsplatte 7 anliegende Führungsleiste formschlüssig an der Führungsplatte 7 geführt ist. In ähnlicher Weise erfolgt die Führung des Schiebestückes 10 an dessen anderer Querseite, d.h. an der in den Fig. 1 und 3 linken Querseite mit Hilfe einer die Führungsplatte 7 hinter- bzw. untergreifenden Führungsleiste 16 und eines die Führungsleiste 16 im notwendigen Abstand von der Unterseite des Schiebestückes 10 haltenden Abstandselementes, wobei das Abstandselement hier nicht von einer Zwischenleiste, sondern von einer Aufnahmeplatte 17 gebildet ist, die zusammen mit der Führungsleiste 16 am Schiebestück 10, z.B. durch Schrauben befestigt ist und über die in den Fig. 1 und 3 linke Querseite des Schiebestücks 10 vorsteht.

Die mit dem Schiebestück 10 verbundene Aufnahmeplatte 17 dient zur Führung des zweiten verschiebbaren Elementes der erfindungsgemäßen Vorrichtung, welches bei der dargestellten Ausführungsform als linealartiger bzw. flacher Meßstab 18 ausgeführt ist. Dieser Meßstab 18 gleitet mit seiner Unterseite auf der der Grundplatte 1 abgewandten Oberseite der Aufnahmeplatte 17 und ist in Richtung des Doppelpfeiles B, d.h. in Richtung der Querseiten 7" und damit senkrecht zum Doppelpfeil A verschiebbar. Zur formschlüssigen Führung in Richtung des Doppelpfeiles B ist an der Unterseite des Meßstabes 18 eine sich in Längsrichtung dieses Meßstabes erstreckende Nut 19 eingebracht, in welche von unten her ein an der Aufnahmeplatte 17 vorgesehenes Führungselement 20, vorzugsweise wenigstens eine Paßfeder hineinreicht. Dieses Führungselement 20 liegt in einer beidendig geschlossenen Nut 21 an der Oberseite der Aufnahmeplatte 17.

Nach oben hin ist der Meßstab 18 durch ein im wesentlichen als rechteckförmige Platte ausgebildetes Klemmstück 27 an der Aufnahmeplatte gesichert, d.h. das Klemmstück 22 liegt mit seiner Unterseite gegen die Oberseite des flachen Meßstabes 18 an.

Der Meßstab 18 trägt an seiner Oberseite eine Skala, die bei der dargestellten Ausführungsform ebenso wie die Skala des Streifens 12 eine Zentimetereinteilung aufweist, d.h. alle fünf Millimeter einen Skalenstrich besitzt, wobei jeder zweite Skalenstrich ausgehend von Null mit "1", "2" und so weiter bezeichnet ist. Bei der dargestellten Ausführungsform besitzen die Skalen auf dem Streifen 12 sowie auf dem Meßstab 18 jeweils eine Länge von 130 mm, d.h. die Skaleneinteilung endet jeweils mit der Ziffer "13" (13 cm). Selbstverständlich sind auch andere Skaleneinteilungen bzw. kürzere oder längere Skalen am Streifen 12 und/oder am Meßstab 18 möglich.

Die Skaleneinteilung am Meßstab 18 ist durch eine seitlich offene Ausnehmung 23 im Klemmstück 22 sichtbar, welches mit seiner Längserstreckung senkrecht zur Verschiebungsrichtung B liegt.

Das Klemmstück 22, welches im Bereich seiner einen Querseite, d.h. im Bereich der Ausnehmung 23 gegen den Meßstab 18 anliegt, stützt sich mit einem im Bereich seiner anderen Querseite vorgesehenen und über die Unterseite des Klemmstückes vorstehenden Ansatz 24 gegen die Oberseite der Aufnahmeplatte 17 ab, wobei die Höhe des Ansatzes 24 in etwa der Dicke des Meßstabes 18 entspricht. Durch eine Rändelschraube 25, die mit ihrem Gewindeabschnitt durch eine Bohrung 26 des Klemmstückes 22 hindurch in eine Gewindebohrung 27 der Aufnahmeplatte 17 eingreift, läßt sich der Meßstab 18 zwischen dem Klemmstück 22 und der Aufnahmeplatte 17 in jeder beliebigen Stellung festklemmen. Durch Führungsmittel, die zwischen dem Klemmstück 22 und der Aufnahmeplatte 17 wirken, ist dafür gesorgt, daß sich das Klemmstück 22 nur in Richtung senkrecht zu den Oberflächenseiten der Aufnahmeplatte 17 bewegen kann, sich ansonsten jedoch nicht relativ zur Aufnahmeplatte 17 verschieben kann. Im Bereich des geschlossenen Endes der Ausnehmung 23 ist am Klemmstück 22 eine Nonius-Skala 28 befestigt, die im Zusammenwirken mit der Skala auf dem Meßstab 18 wie bei einer Schieblehre eine Einstellung des Meßstabes 18 in Richtung des Doppelpfeiles B mit einer Ablesegenauigkeit von 0,1 mm gestattet. Die gleiche Nonius-Skala 29 ist auch am Schiebestück 10, und zwar dort am offenen Ende der Ausnehmung 13 vorgesehen. Die Nonius-Skala 29 ist an der Oberseite der Zwischenleiste 14 befestigt und gestattet im Zusammenwirken mit der Skala auf dem Streifen 12 eine Einstellung des Schiebestückes 10 in Richtung des Doppelpfeiles A mit einer Ablesegenauigkeit von 0,1 mm. Zum Festklemmen des Schiebestückes 10 dient eine Rändelschraube 30, die mit ihrem Gewindeabschnitt parallel zu den Oberflächenseiten der Führungsplatte 7 sowie senkrecht zu der in den Fig. 1 und 3 rechten Längsseite 7' dieser Führungsplatte liegt und in eine Gewindebohrung der Zwischenleiste 14 eingreift. Zum Festklemmen des Schiebestückes 10 an der Führungsplatte 7 wird die Rändelschraube 30 so gedreht, daß das freie Ende ihres Gewindeabschnittes gegen die in den Fig. 1 und 3 rechte Längsseite 7' angepreßt anliegt.

An seinem über der Führungsplatte 7 liegenden Ende ist der Meßstab 18, welcher sich mit einer Längsseite gegen eine Längsseite 10' des Schiebestückes abstützt, mit einem seitlichen Ansatz 18' versehen, welcher über die dem Schiebestück 10 entfernt liegende Längsseite des Meßstabes vorsteht und mit dieser Längsseite zwei Anlageflächen 31 und 32 für Bezugsflächen an einem Werkstück bildet, wobei die Anlageflächen 31 und 32 senkrecht zueinander liegen und eine gemeinsame Ecke 33 an dem betreffenden Ende des Meßstabes 18 bilden. Die Anlagefläche 31, die bei der dargestellten Ausführungsform mit der dem Schiebestück 10 entfernt liegenden Längsseite des Meßstabes 18 identisch ist, erstreckt sich in Richtung der durch den Doppelpfeil B festgelegten Koordinatenachse, während sich die Anlagefläche 32, die vom Ansatz 18' gebildet ist, sich in Richtung der durch den Doppelpfeil A festgelegten Koordinatenachse erstreckt.

In der Führungsplatte 7 ist weiterhin eine Zentrierbohrung 34 vorgesehen, die zum Zentrieren bzw. zum Justieren der Vorrichtung bezogen auf das Werkzeug (z.B. Zentrierbohrer) der Werkzeugmaschine (z.B. Ständerbohrmaschine) dient. Die Zentrierbohrung 34 ist bei der dargestellten Ausführungsform so angebracht, daß die Achse dieser Zentrierbohrung genau in der von den Anlageflächen 31 und 32 gebildeten Ecke 33 bzw. in dem Schnittpunkt dieser Anlageflächen liegt, wenn sich das Schiebestück 10 und der Meßstab 18 jeweils in ihrer von den Skalen auf dem Streifen 12 und der zugehörigen Nonius-Skala 29 bzw. von der Skala am Meßstäb 18 und der zugehörigen Nonius-Skala 28 angezeigten Null-Stellung befinden.

Wie insbes. die Fig. 2 zeigt, ist die Zentrierbohrung 34 konisch ausgebildet, d.h. diese Zentrierbohrung verengt sich von der Oberseite der Führungsplatte 7 konisch zur Unterseite dieser Führungsplatte. Zum Zentrieren bzw. zum Justieren der Vorrichtung dient ein mit der Zentrierbohrung 34 zusammenwirkender, an einem Ende ebenfalls konisch bzw. kegelstumpfförmig ausgebildeter Zentrierdorn 35, der mit seinem anderen Ende in der Werkzeughalterung, z.B. in dem Bohrfutter der Werkzeugmaschine eingespannt wird.

Bei Verwendung der erfindungsgemäßen Vorrichtung wird so vorgegangen, daß diese mit Hilfe der Grundplatte zunächst locker, d.h. bei noch nicht festgezogenen Schrauben 2 an der Arbeitsfläche z.B. einer Ständerbohrmaschine befestigt wird. Gleichzeitig wird der Zentrierdorn 35 in das Bohrfutter der Ständerbohrmaschine eingespannt und dann durch Absenken der Bohrmaschine und gleichzeitiges Verschieben der Vorrichtung mit seinem kegelstumpfförmig ausgebildeten Ende in die Zentrierbohrung 34 eingeführt. Im Anschluß daran werden die Schrauben 2 festgezogen, wodurch die Vorrichtung bezüglich der Werkzeugmaschine (z.B. Ständerbohrmaschine) sowie bezüglich eines später in der Werkzeughalterung (z.B. Bohrfutter) zu befestigenden Werkzeuges (z.B. Zentrierbohrer) justiert bzw. ausgerichtet ist.

Durch entsprechende Einstellungen des Schiebestückes 10 sowie des Meßstabes 18 können nun bei justierter bzw. ausgerichteter Vorrichtung in ein Werkstück, welches von Hand mit seinem Bezugsflächen gegen die Anlageflächen 31 und 32 zur Anlage gebracht wird, beispielsweise Bohrungen, z.B. Zentrierbohrungen eingebracht werden, wobei diese Bohrungen dann von den Bezugsflächen des Werkstückes in den beiden Koordinatenachsen A und B einen Abstand aufweisen, der mit Hilfe der Skalen am Streifen 12 sowie am Meßstab 18 eingestellt wurde.

Die erfindungsgemäße Vorrichtung zeichnet sich durch eine besonders einfache konstruktive Ausführung sowie durch eine sehr einfache Handhabung aus, was vor allem auch hinsichtlich der Zentrierung bzw. Justierung dieser Vorrichtung an der verwendeten Werkzeugmaschine gilt, da für diese Zentrierung lediglich ein einziger Zentriervorgang notwendig ist, nämlich die Vorrichtung bzw. deren Führungsplatte 7 so bezüglich der Werkzeughalterung der Werkzeugmaschine (Ständerbohrmaschine) auszurichten, daß der Zentrierdorn 35 in der Zentrierbohrung 34 zu liegen kommt.

Die Erfindung wurde voranstehend an einem Ausführungsbeispiel beschrieben. Es versteht sich,d aß Änderungen sowie Abwandlungen möglich sind, ohne daß dadurch der der Erfindung zugrundeliegende Gedanke verlassen wird.

So kann beispielsweise die Zentrierung der Vorrichtung an der Werkzeugmaschine (z.B. Ständerbohrmaschine) auch mit Hilfe eines an sich bekannten Kantentasters erfolgen, der in der Werkzeughalterung (z.B. Bohrfutter) befestigt wird und bei der Zentrierung bzw. Justierung der Vorrichtung mit den Anlageflächen 31 und 32 zur Anlage gebracht wird. Ein derartiger Kantentaster besteht aus zwei Wellen, die an einer Stirnseite beispielsweise durch eine Feder miteinander verbunden sind, und von denen die eine Welle in der Werkzeughalterung eingespannt wird, während die andere Welle durch Verschieben der Vorrichtung langsam zur Anlage gegen die Anlageflächen 31 und 32 gebracht wird.Bei dieser Art der Justierung, bei der die Zentrierbohrung 34 und der Zentrierdorn 35 nicht erforderlich sind, werden das Schiebestück 10 sowie der Meßstab 18 so eingestellt, daß die Skalen am Streifen 12 sowie am Meßstab 18 jeweils einen Wert anzeigen, der gleich dem Radius des Kantentasters im Bereichseines freien Endes ist, welches mit den Anlageflächen 31 und 32 zur Anlage gebracht werden soll. Die Justierung erfolgt hierbei, wie dies bei Verwendung von Kantentastern üblich ist, bei eingeschalteter Bohrmaschine.

Weiterhin ist es grundsätzlich auch möglich, zur Justierung der Vorrichtung den Zentrierdorn 35 zusammen mit einem "Normwerkstück" zu verwenden, welches eine der Zentrierbohrung 34 entsprechende Zentrierbohrung in vorgegebenen Abständen von Bezugsflächen aufweist. In diesem Fall werden dann für die Zentrierung das Schiebestück 10 sowie der Meßstab 18 so eingestellt, daß die zugehörigen Skalen die Abstände anzeigen, die die Zentrierbohrung am Normwerkstück von dessen Bezugsflächen aufweist. Das Normwerkstück wird dann mit den Anlageflächen 31 und 32 zur Anlage gebracht, worauf die Justierung bzw. Zentrierung der Vorrichtung mit Hilfe des in die Werkzeugmaschine eingespannten Zentrierdornes 35 und der am Normwerkstück vorgesehenen Zentrierbohrung erfolgen kann.

Selbstverständlich ist es grundsätzlich auch möglich, zur Einstellung des Schiebestücks 10 sowie des Meßstabes 18 anstelle von Skalen elektrische Wegmesser vorzusehen, die eine elektrische Anzeige liefern.

Um die Einstellgenauigkeit des Meßstabes bzw. Elementes 18 zu erhöhen und vor allem auch ein paralaxenfreies Ablesen der Einstellung zu erreichen, ist es möglich, das Element 18 so dick auszubilden, daß dessen die Meß- bzw. Einstellskala tragende Oberseite mit der Oberseite des Schiebestückes 10 fluchtet, wobei dann die Nonius-Skala 28 an der Oberseite des Schiebestückes 10 vorgesehen ist. In diesem Fall muß selbstverständlich die Skala am Element 18 entsprechend versetzt werden. Zur Erhöhung der Einstellgenauigkeit des Schiebestücks 10 sowie zur Erzielung eines paralaxenfreien Ablesens ist es weiterhin auch möglich, die Nonius-Skala 29 an einer Fläche dieses Schiebestücks, z.B. an der oberen Fläche der Zwischenleiste 14 vorzusehen, die feluchtend mit der Oberseite der Führungsplatte 7 liegt, wobei in diesem Fall dann auch die zugeordnete Meßskala auf der Oberseite der Führungsplatte 7 oder auf einem Streifen aufgebracht
ist, dessen Oberseite mit der Führungsplatte 7 fluchtet.

- 1 -                                          0059934

<u>Patentansprüche :</u>

1. Vorrichtung zum lagegenauen Ausrichten eines Werkstückes in zwei, vorzugsweise senkrecht zueinander verlaufenden Koordinatenachsen bezüglich wenigstens eines Werkzeugs oder einer Werkzeughalterung einer Werkzeugmaschine, mit einer eine Werkstückauflagefläche bildenden Basisplatte, mit wenigstens zwei verschiebbaren Elementen auf der Werkstückauflagefläche zur Bildung von wenigstens zwei einstellbaren Werkstückanlageflächen, von denen das erste Element in der ersten Koordinatenachse und das zweite Element in der zweiten Koordinatenachse verschiebbar ist, sowie mit den verschiebbaren Elementen zugeordneten Meßeinrichtungen zur Anzeige der jeweiligen Lage der Werkstückanlageflächen bezogen auf eine Ausgangsstellung dieser Anlageflächen, wobei zur Justierung der Vorrichtung bezüglich des Werkzeugs bzw. der Werkzeughalterung im Bereich der Werkstückauflagefläche eine Markierung vorgesehen ist, dadurch gekennzeichnet, daß das erste Element (10) mit Führungsstücken (14, 17) beidendig an zwei sich in Richtung der ersten Koordinatenachse (A) erstreckenden und parallel zueinander verlaufenden Seitenflächen (7') der Basisplatte (7) geführt ist, daß das zweite Element (18) an dem ersten Element (10) verschiebbar gehaltert ist und sich mit einer in Richtung der zweiten Koordinatenachse (B) sowie quer bzw. senkrecht zur Werkstückauflagefläche erstreckenden und eine Führungsfläche bildenden seitlichen Begrenzungsfläche gegen eine seitliche Begrenzungsfläche (10') des ersten Elementes (10) abstützt, und daß die dem zweiten Element (18) zugeordnete Meßeinrichtung die Verschiebung dieses zweiten Elementes (18) relativ zum ersten Element (10) anzeigt.

2. Vorrichtung nach Anspruch 1, dadurch gekennzeichnet, daß die beiden Werkstückanlageflächen (31, 32) am zweiten Element (18) gebildet sind.

3. Vorrichtung nach Anspruch 1 oder 2, dadurch gekennzeichnet, daß das zweite Element (18) stabförmig ausgebildet ist, daß eine Längsseite des zweiten Elementes (18) die gegen die seitliche Begrenzungsfläche (10') des ersten Elementes (10) sich abstützende Führungsfläche bildet, und daß an einem Ende des zweiten Elementes (18) ein über die andere Längsseite (31) seitlich wegstehender Ansatz (18') vorgesehen ist, wobei vorzugsweise die andere Längsseite (31) des zweiten Elementes (18) eine erste Werkstückanlagefläche und eine mit dieser anderen Längsseite (31) einen Winkel bildende Fläche (32) des Ansatzes (18') eine zweite Werkstückanlagefläche bilden.

4. Vorrichtung nach einem der Ansprüche 1 bis 3, dadurch gekennzeichnet, daß das erste Element (10) plattenförmig, vorzugsweise als rechteckförmige Platte ausgebildet ist, und daß die Führungsstücke (14, 17) von der der Werkstückauflagefläche zugewandten Unterseite des ersten Elementes (10) wegstehen.

5. Vorrichtung nach einem der Ansprüche 1 bis 4, dadurch gekennzeichnet, daß das erste Element (10) die Basisplatte (7) an ihrer der Werkstückauflagefläche abgewandten Unterseite mit Führungsleisten (15, 16) hintergreift, die vorzugsweise an den Führungsstücken (14, 17) befestigt sind.

6. Vorrichtung nach einem der Ansprüche 1 bis 5, dadurch gekennzeichnet, daß zur Führung des zweiten Elementes (18) am ersten Element (10) ein erster Plattenteil (17) befestigt ist, der über die als Anlage für das zweite Element (18) dienende seitliche Begrenzungsfläche (10') des ersten Elementes (10) vorsteht, und an diesem ersten Plattenteil ein vorzugsweise als zweiter Plattenteil (22) ausgebildetes Klemmstück gehalten ist, und daß das zweite Element (18) mit seiner der Basisplatte (7) zugewandten Unterseite gegen den ersten Plattenteil anliegt und dort vorzugsweise mit einer Nut-Feder-Führung (19, 20) formschlüssig in Richtung der zweiten Koordinatenachse (B) geführt ist, und daß das Klemmstück (22) gegen die der Basisplatte (7) abgewandte Oberseite des zweiten Elementes (2) anliegt.

7. Vorrichtung nach Anspruch 6, dadurch gekennzeichnet, daß der erste Plattenteil (17) außerhalb der Basisplatte (7) seitlich von einer der Seitenflächen (7') dieser Basisplatte (7) angeordnet ist und vorzugsweise eines der beiden Führungsstücke (14, 17) bildet.

8. Vorrichtung nach einem der Ansprüche 1 bis 7, dadurch gekennzeichnet, daß die dem zweiten Element (18) zugeordnete Meßeinrichtung von einer Meßskala am zweiten Element (18) sowie von einem dieser Meßskala zugeordneten Nonius (28) am ersten Element (10) gebildet ist.

9. Vorrichtung nach einem der Ansprüche 1 bis 8, dadurch gekennzeichnet, daß die zur Justierung der Vorrichtung bezüglich des Werkzeugs bzw. der Werkzeughalterung dienende Markierung von einer Zentrierbohrung (34) in der Basisplatte (7), vorzugsweise von einer sich kegelstumpfförmig oder konisch verjüngenden Zentrierbohrung (34) gebildet ist, und daß die Achse bzw. der Mittelpunkt der Zentrierbohrung (34) mit dem Schnittpunkt (33) der beiden Werkstückanlageflächen (31, 32) zusammenfällt, wenn sich diese Anlageflächen (31, 32) in ihrer Ausgangsstellung, z.B. in ihrer von den Meßeinrichtungen angezeigten Nullstellung befinden.

10. Vorrichtung nach einem der Ansprüche 1 bis 8, dadurch gekennzeichnet, daß die zur Justierung der Vorrichtung bezüglich des Werkzeugs bzw. der Werkzeughalterung dienende Markierung von wenigstens zwei einen Winkel einschließenden Flächen an den verschiebbaren Elementen (10, 18), vorzugsweise von den Werkstückanlageflächen (31, 32) gebildet ist, und daß zum Justieren der Vorrichtung ein mit diesen Flächen (31, 32) zusammenwirkender und in die Werkzeughalterung einspannbarer Kantentaster vorgesehen ist.

Fig.1

Fig.2

0059934

Fig.3

Fig.4

Fig. 5

Fig. 6

Fig.7

Fig.8

22

26

23

27

21

17

1

4

Fig.10

5

6

3

6

5

0059934

0059934

Fig.9

**Europäisches Patentamt**

# EUROPÄISCHER RECHERCHENBERICHT

EP  82 10 1646

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB-A-1 323 396  (BLUE) <br><br> * Ansprüche 1,7 * <br><br> --- | 1-6,8 10 | B 23 Q  17/16 |
| Y | US-A-2 374 286  (HARGADON) <br> * Seite 1, rechte Spalte, Zeilen 47-54 * <br><br> --- | 1,3 | |
| A | US-A-2 276 819  (BOEHMER) <br> * Seite 1, rechte Spalte, Zeilen 35-43 * <br><br> --- | 2 | |
| A | CH-A-  257 169  (REINERT) <br> * Seite 3, Zeilen 5-9 * <br><br> --- | 8 | |
| A | GB-A-1 041 397  (SCHARDT) <br> * Seite 3, Zeilen 18-25 * <br><br> --- | 9 | |
| A | GB-A-  203 341  (LAMBERT) <br> * Seite 4, Zeilen 4-12 * <br><br> --- | 10 | **RECHERCHIERTE SACHGEBIETE (Int. Cl. ³)** <br><br> B 23 Q  17/00 <br> B 23 Q  21/00 <br> B 23 Q  35/00 |
| A | US-A-3 270 591  (WINTER) <br><br> --- | | B 23 Q  1/00 <br> B 23 B  49/00 <br> G 01 C  3/00 |
| A | GB-A-2 002 269  (ZEILER) <br><br> --- | | |
| A | US-A-3 636 814  (ESCH) <br><br> --- | | |

Der vorliegende Recherchenbericht wurde für alle Patentansprüche erstellt.

| Recherchenort <br> DEN HAAG | Abschlußdatum der Recherche <br> 11-06-1982 | Prüfer <br> DE GUSSEM J.L. |
|---|---|---|

0059934

Nummer der Anmeldung

EP 82 10 1646

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 782 520 (AM END) | | |
| A | US-A-3 918 167 (GERBER) | | |
| A | CH-A- 354 313 (BREGNARD) | | |

RECHERCHIERTE
SACHGEBIETE (Int. Cl. ³)

Der vorliegende Recherchenbericht wurde für alle Patentansprüche erstellt.

| Recherchenort DEN HAAG | Abschlußdatum der Recherche 11-06-1982 | Prüfer DE GUSSEM J.L. |
|---|---|---|